# EUROPEAN PATENT SPECIFICATION

(11) **EP 3 981 181 B1**
(45) Date of publication and mention of the grant of the patent: **05.06.2024**
(21) Application number: 20792760.9
(22) Date of filing: 02.10.2020
(51) Int. Cl.: H04W 8/18, H04W 76/34, H04W 88/04

(54) **CONTROLLING AND RESTRICTING MOF USER IDENTITIES PER UE**
VERWALTUNG UND BEGRENZUNG DER BENUTZERIDENTIÄTEN PRO ENDGERÄT
GESTION ET LIMIATION DES IDENTITÉS D'UTILISATEUR PAR TERMINAL D'UTILISATEUR

(30) Priority: 11.10.2019 EP 19202859
(43) Date of publication of application: 13.04.2022
(73) Proprietor: NEC Corporation, 108-8001 Tokyo (JP)
(72) Inventor: IANEV, Iskren, 69115 Heidelberg (DE); TAMURA, Toshiyuki, Tokyo 108-8001 (JP)
(74) Representative: MacDougall, Alan John Shaw
(86) International application number: PCT/JP2020/037557
(87) International publication number: WO 2021/070744

(56) References cited:
- DEUTSCHE TELEKOM ET AL: "UIA Service Requirements", 3GPP DRAFT; 22101_CR0549R2_(REL-16)_S1-182704, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. West Palm Beach, Florida, USA; 20180820 - 20180824 9 September 2018 (2018-09-09), XP051561873, Retrieved from the Internet: URL:http://www.3gpp.org/ftp/Meetings%5F3GP P%5FSYNC/SA/Docs/SP%2D180767%2Ezip [retrieved on 2018-09-09]
- SA WG2: "New SID: Study on the Usage of User Identifiers in the 5G System", 3GPP DRAFT; SP-190450_S2-1906717_USER IDENTITIES SID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA, no. Newport Beach, USA; 20190605 - 20190607 29 May 2019 (2019-05-29), XP051749085, Retrieved from the Internet: URL:http://www.3gpp.org/ftp/Meetings%5F3GP P%5FSYNC/SA/Docs/SP%2D190450%2Ezip [retrieved on 2019-05-29]
- CONVIDA WIRELESS LLC ET AL: "Key Issue #3 Update and Solution to Support Slice Specific Authentication and Authorization while using 3GPP UE as a gateway for non 3GPP devices accessing the network", 3GPP DRAFT; S2-1810099 - FS_ENS KI-3 UPDATE AND SOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dongguan, P.R. China; 20181015 - 20181019 9 October 2018 (2018-10-09), XP051539095, Retrieved from the Internet: URL:http://www.3gpp.org/ftp/tsg%5Fsa/WG2%5 FArch/TSGS2%5F129%5FDongguan/Docs/S2%2D181 0099%2Ezip [retrieved on 2018-10-09]
- PEYRAVIAN M ET AL: "Connection preemption: issues, algorithms, and a simulation study", INFOCOM '97. SIXTEENTH ANNUAL JOINT CONFERENCE OF THE IEEE COMPUTER AN D COMMUNICATIONS SOCIETIES. DRIVING THE INFORMATION REVOLUTION., PROCE EDINGS IEEE KOBE, JAPAN 7-11 APRIL 1997, LOS ALAMITOS, CA, USA,IEEE COMPUT. SOC, US, vol. 1, 7 April 1997 (1997-04-07), pages 143-151, XP010252021, DOI: 10.1109/INFCOM.1997.635124 ISBN: 978-0-8186-7780-9

## Description

### Technical Field

The present disclosure relates to a communication system. The disclosure has particular but not exclusive relevance to wireless communication systems and devices thereof operating according to the 3rd Generation Partnership Project (3GPP) standards or equivalents or derivatives thereof. The disclosure has particular although not exclusive relevance to control and restriction of user identities in the so-called '5G' (or 'Next Generation') systems.

### Background Art

3GPP SA2 Working Group has approved Study on the Usage of User Identifiers in the 5G System (FS_UUI5). The aim is to enhance the 5G System to allow for the creation and utilization of user-specific identities. This will allow to provide enhanced user experience, optimized performance, and offer services to devices and users that are not part of the operator's 3GPP network. In the context of this work, the user to be identified could be an individual human user using a UE with a certain subscription, an application running on or connecting via a UE, or a device ("thing") behind a gateway UE.

The Use cases are thoroughly discussed in 3GPP Technical Report (TR) 22.904 and include:
- One or more users (i.e. humans) sharing one UE
- One or more users (i.e. devices) behind one gateway UE
- One or more users (i.e. gaming applications) running on the same UE and each treated as a different user.

This work is based on the SA1 FS_LUCIA (SP-170995) study of the utility of user identities in the 3GPP System and the normative requirements for the support of user identities that were added to 3GPP Technical Specification (TS) 22.101 and 3GPP TS 22.115 as part of the UIA (SP-180328) work item.

The objectives of this 3GPP SA2 study are to study how the 5G System can be enhanced to allow the operator to utilize user-specific identities in the 3GPP network. The following aspects are to be studied:
- Define the architectural assumptions that enable the support of user identities, including authentication/authorization of user identities, and the related involvement of the mobile operator network.
- What user identity specific settings and parameters need to be taken into account by the 3GPP system when delivering a service.
- What information is stored as part of the user profile (e.g. a user identity, user identity specific settings, charging details and parameters), and how user profiles are stored and updated in the 5GC, and how and what user profile information can be exposed to application functions (e.g. for edge computing or towards a 3rd party).
- Whether and how user identifiers are linked and unlinked with 3GPP subscriptions.
- How the network controls, or limits, the usage of user identifiers (e.g. how the operator restricts the number of simultaneously active user identifiers per UE, restricts the usage a user identifier in roaming scenarios, and suspends usage of the user identifier based on operator policy or location).
- How the network takes the user identity into account when adapting network, operator-deployed, and 3rd party service settings (e.g. policies, N6 service chain), for example, when performing network slice selection.
- How and why traffic is segregated (e.g. traffic segregation between users of the same UE for Policy Enforcement and Charging).
- How appropriate charging can be enabled when there is a separation based on user, for users using the same UE and subscription.
- Whether and if there are enhancements needed to the 3GPP System to support delivering MO and MT Services to user(s) (e.g. impacts to mobility management procedures).

### [Non-Patent Literature]

[NPL 1] DEUTSCHE TELEKOM ET AL: "UIA Service Requirement" 3GPP DRAFT; 22101_CR0549R2_(REL-16)_S1-182704, 3RD GENERATION PARTNERSHIP PROJECT (3GPP), MOBILE COMPETENCE CENTRE; 65 0, ROUTE DES LUCIOLES; F -06921 SOPHIA-ANTIPOLIS CEDEX: F RANCE vol. SA WG1 no. West Palm Beach, Florida, USA, 20180820-20180824 9 September 2018 (2018-09-09), XP051561873.
[NPL 2] SA WG2: "New SID: Study on the Usage of User Identifiers in the 5G System", 3GPP DRAFT; SP-190450_S2-1906717 USER IDENTITIES SID, 3RD GENERATION PARTNERSHIP PROJECT (3GPP), MOBILE COMPETENCE CENTRE; 650, ROUTE DES LUCIOLES; F -06921 SOPHIA-ANTIPOLIS CEDEX; F RANCE vol. TSG SA, no. Newport Beach, USA; 20190605 - 20190607 29 May 2019 (2019-05-29), XP051749085.
[NPL 3] PEYRAVIAN M ET AL: "Connection preemption: issues, algorithms, and a simulation study", INFOCOM '97. SIXTEENTH ANNUAL JOINT CONFERENCE OF THE IEEE COMPUTER AN D COMMUNICATIONS SOCIETIES. DRIVING THE INFORMATION REVOLUTION., PROCEEDINGS IEEE KOBE, JAPAN 7-11APRIL1997 LOS ALAMITOS CA USA IEEE COMPUT. SOC, US, vol. 1, 7April1997 (1997-04-07), pages 143-151, XP010252021.

### [Technical Problem]

This disclosure addresses the following example objectives from the Study on the Usage of User Identifiers in the 5G System (FS_UUI5):
- How the network controls, and/or limits, the active user(s) (e.g. how the operator restricts the number of simultaneously active user(s) per UE, the number of registered user(s) per UE, how the operator restricts the active user(s) in roaming scenarios, and/or suspends the usage of the user(s) based on operator policy or location).

### [Summary of Invention]

The present invention provides an access and mobility management function, and an associated method as defined in the appended independent claims. Optional features are defined in the appended dependent claims.

According to an aspect of the present invention, an access and mobility management function node, includes: means for determining a user with lowest priority among users in User Equipment, UE, simultaneously used by the users in a case where the number of users of the UE exceeds a threshold; and means for initiating a release procedure for a PDU session of the user with lowest priority, wherein the threshold indicates a max allowed number of users for the UE.

According to another aspect of the present invention, a controlling method for an access and mobility management function node, includes: determining a user with lowest priority among users in User Equipment, UE, simultaneously used by the users in a case where the number of users of the UE exceeds a threshold; and initiating a release procedure for a PDU session of the user with lowest priority, wherein the threshold indicates a max allowed number of users for the UE.

### [Brief Description of Drawings]

[fig. 1] Figure 1 is a schematic signalling (timing) diagram illustrating an exemplary method for limiting max number of users per UE by the network (e.g. by AMF).
[fig. 2]Figure 2 is a schematic signalling (timing) diagram illustrating an exemplary method for limiting max number of users per UE by the UE.
[fig. 3]Figure 3 is a schematic signalling (timing) diagram illustrating an exemplary method for controlling maximum number of simultaneously active users per UE control.
[fig. 4]Figure 4 is a schematic signalling (timing) diagram illustrating an exemplary method for controlling maximum number of simultaneously active users per UE control.
[fig. 5]Figure 5 is a schematic signalling (timing) diagram illustrating an exemplary method for multiple users per UE control in connected mode mobility.
[fig. 6]Figure 6 is a schematic signalling (timing) diagram illustrating an exemplary method for multiple users per UE control in idle mode mobility.
[fig. 7]Figure 7 is a schematic signalling (timing) diagram illustrating an exemplary method for controlling a maximum number of registered users per UE in roaming use case.
[fig. 8]Figure 8 schematically illustrates a mobile (cellular or wireless) telecommunication system.
[fig.9]Figure 9 is a block diagram illustrating the main components of the UE (mobile device) shown in Figure 8.
[fig.10] Figure 10 is a block diagram illustrating the main components of an exemplary (R)AN node (base station) shown in Figure 8.
[fig.11] Figure 11 is a block diagram illustrating the main components of a generic core network node.

### Description of Embodiments

### Solution 1: Limiting the number of users per UE

This solution illustrates two conceptual flow models that are common to rest of the solutions.

To solve the problem of managing and limiting the active user(s) per UE (or user identifiers per UE or any other notation for identification of the users that communicate with the network via the same UE 3), the following parameters and flows models are proposed.

New parameters:
- `User priority' attribute in the user profile which may be configured or provided as a subscription information as a part of the user profile within the UDM/UDR 14. The user priority attribute defines the priority among the multiple users per UE. The user priority attribute may take different forms of representations e.g. user priority = [high, medium, low] or user priority = [1 to N] or in any other form of representation in order to establish a priority between the multiple users per UE. The user priority may also be used to allow or restrict certain set of services. The user priority may be defined in the UDM/UDR 14 per PLMN basis. It means that the home network operator may define user priority depending on where UE 3 roams to. The user priority may:
   + Either be configured in the UDM/UDR 14 by the operator as an attribute within the user profile subscription; or
   + be provided in the UDM/UDR 14 by the service owner as an attribute of the user profile via the NEF (Network Expose Function) and consequently be updated by the Network Operator or the Service Provider when necessary.
- Max number of users per UE. The max number of users per UE can be configurable parameter or a subscription parameter as part of the UE context. The max number of users per UE and the user priority can be used to manage and limit the number of users per UE both in idle mode and connected mode. The max number of users per UE may be at least one of:
   + Max number of registered users per UE; and
   + Max number of simultaneously active users per UE.

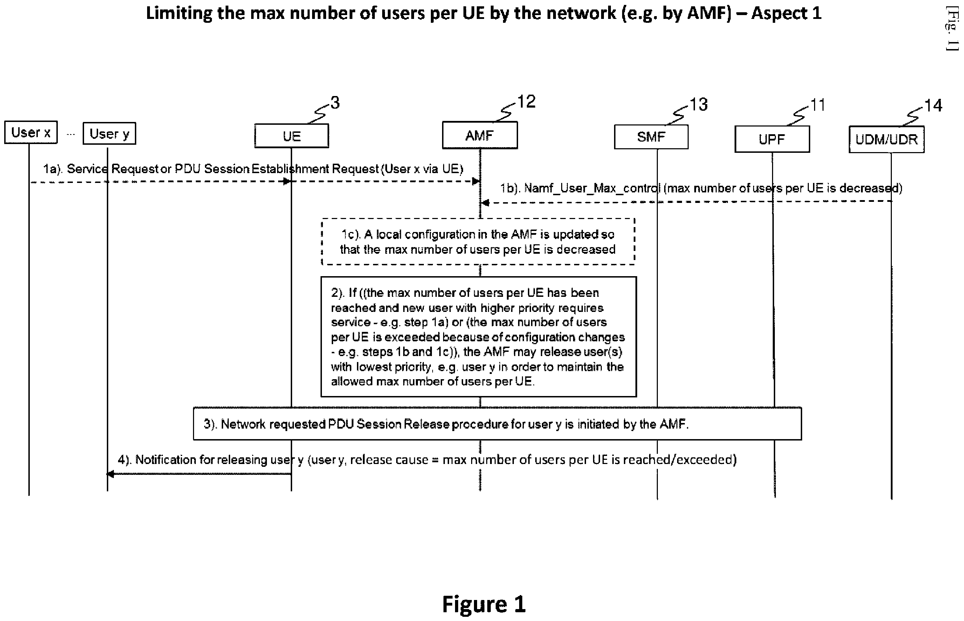

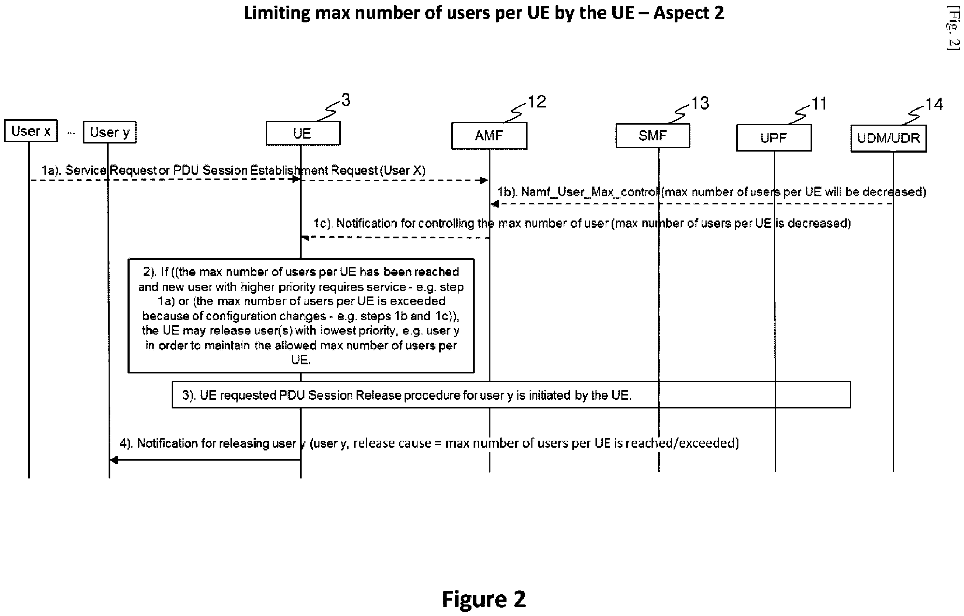

Conceptual flow models:
Example Aspect 1: Limiting max number of users per UE by the network (e.g. by AMF) - When the allowed max number of users per UE has been reached or has been exceeded, the network may release the user(s) with the lowest priority (e.g. user y). Figure 1 is a schematic signalling (timing) diagram illustrating an exemplary method for limiting max number of users per UE by the network (e.g. by AMF).
   Step 1 shows different type of events that can trigger the network to limit or restrict the number of the users per UE:
   1a) A new user (e.g. user x) which has higher priority than user y initiates a Service Request procedure or PDU Session Establishment procedure.
   1b) The UDM/UDR 14 sends a new message Namf_User_Max_control to the AMF 12 as the allowed max number of users per UE in the UDM/UDR 14 is decreased.
   1c) A local configuration in the AMF 12 is updated and the max number of users per UE is decreased.
   2) If ((the max number of users per UE has been reached and new user with higher priority requires service - e.g. step 1a) or (the max number of users per UE is exceeded because of configuration changes - e.g. steps 1b and 1c)), the AMF 12 may release user(s) with lowest priority, e.g. user y in order to maintain the allowed max number of users per UE.
   3). The AMF 12 initiates the network requested PDU Session Release procedure for releasing user y. During the procedure, the SMF 13 informs the UE 3 that release cause = max number of users per UE reached/exceeded.
   4). Release Notification for user y (release cause = max number of users per UE reached/exceeded). The UE 3 notifies user y for the release user y and returns a release cause = max number of users per UE is reached/exceeded.
Example Aspect 2 not being part of the invention:
   & Limiting max number of users per UE by the UE When the allowed max number of users per UE has been reached or has been exceeded, the UE 3 may release the user(s) with the lowest priority (e.g. user y). Figure 2 is a schematic signalling (timing) diagram illustrating an exemplary method for limiting max number of users per UE by the UE.
   Step 1 shows different type of events that can trigger the network to limit or restrict the number of the users per UE:
      - 1a) A new user (e.g. user x) which has higher priority than user y initiates a Service Request procedure or PDU Session Establishment procedure.
      - 1b-1c) The UDM/UDR 14 sends a new message Namf_User_Max_control to the UE 3 via the AMF 12 since the max number of allowed users per UE in UDM/UDR 14 is decreased or a local configuration in the AMF 12 is updated and the max number of users per UE is decreased.

   2). If ((the max number of users per UE has been reached and new user with higher priority requires service - e.g. step 1a) or (the max number of users per UE is exceeded because of configuration changes - e.g. steps 1b and 1c)), the UE 3 may release user(s) with lowest priority, e.g. user y in order to maintain the allowed max number of users per UE.
   3). The UE 3 initiates the network requested PDU Session Release procedure for releasing user y.
   4). Release Notification for user y (release cause = max number of users per UE reached/exceeded). The UE 3 notifies user y for the release of user y and returns a release cause = max number of users per UE is reached/exceeded.

**Solution 2: Maximum number of simultaneously active users per UE control Example Aspect 3: Network centric solution** - When the allowed max number of simultaneously active users per UE has been reached or exceeded and the UE 3 initiates new session from a new user, the network may release the user(s) with the lowest priority (e.g. user y) in order to accommodate a new user (e.g. user x) which has higher priority than user y.

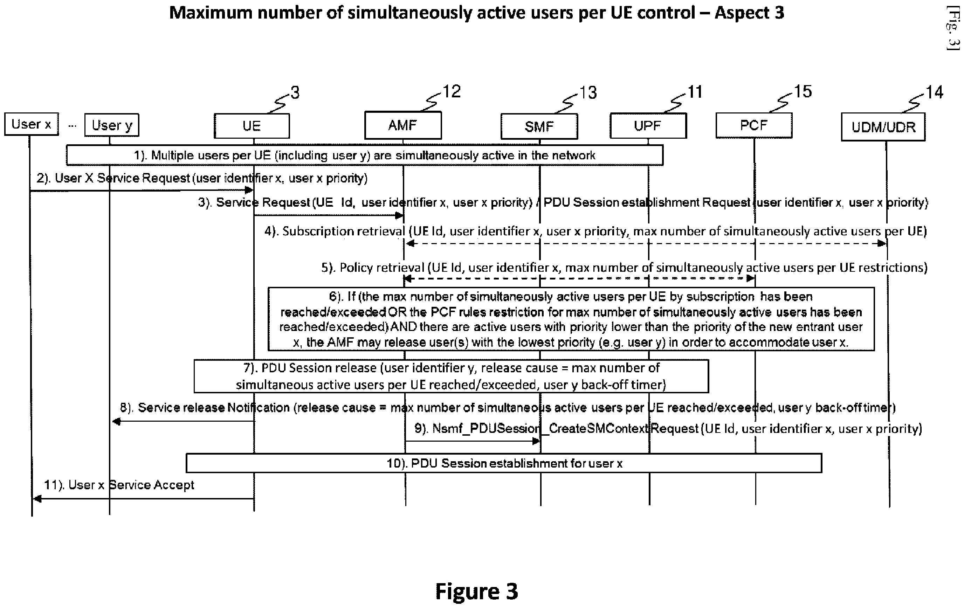

Figure 3 is a schematic signalling (timing) diagram illustrating an exemplary method for controlling maximum number of simultaneously active users per UE control.
1). Multiple users per UE (including user y) are simultaneously active in the network, e.g. The UE 3 has multiple PDU sessions with the network. The AMF 12 keeps track of the current number of active users per UE, i.e. when the AMF 12 accepts new PDU session from a new user from a certain UE 3, the AMF 12 increases the number of the current active users per that UE 3. When the AMF 12 releases or deactivates an existing PDU session and that PDU session is the only PDU session for that user, then the AMF 12 decreases the number of the current active users per that UE 3.
2). User x Service Request (user identifier x, user x priority) - User x requests a service and user x indicates its user Id and user priority to the UE 3.
3). Service Request (UE Id, user identifier x, user x priority) / PDU Session Establishment Request (user identifier x, user x priority) - The UE 3 triggers a Service Request or PDU Session establishment for user x. The UE 3 indicates user x priority in the Service Request message or PDU Session Establishment message to the network, e.g. to the AMF 12. The UE 3 may indicate a user x priority only if user x has a compelling reason for pre-empting PDU session. For example, user x needs to establish an emergency call. Alternatively, the UE 3 may indicate an override indication with regard to the user priority control.
4). Subscription retrieval (UE Id, user identifier x, user x priority, max number of simultaneously active users per UE) - The AMF 12 may retrieve the subscription information for user x from the UDM/UDR 14 including the user priority for user x and the max number of simultaneously active users per UE if the user x subscription information is not already available in the AMF 12. The max number of simultaneously active users per UE may also be operator defined or configured in the AMF 12. If the max number of simultaneously active users per UE in subscription does not match with the one configured in the AMF 12, then AMF configuration can take precedence over the subscription data. Alternatively, if the max number of simultaneously active users per UE in subscription does not match with the one configured in the AMF 12, then subscription data can take precedence over the AMF configuration.
5). Policy retrieval (UE Id, user identifier x, max number of simultaneously active users per UE) - The AMF 12 may also retrieve the Policy Rules from the PCF 15 including any operator defined restriction (e.g. location or service restrictions) including max number of simultaneously active per UE restrictions. If max number of simultaneous active users per UE restriction is available via the PCF 15, the max number of simultaneously active users per UE retrieved from PCF 15 overrides the one retrieved by the UDM/UDR 14.
6). If (the max number of simultaneously active users per UE by subscription has been reached/exceeded OR the PCF rules restriction for max number of simultaneously active users has been reached/exceeded) AND there are active users with priority lower than the priority of the new entrant user x, the AMF 12 may release user(s) with the lowest priority (e.g. user y) in order to accommodate user(s) with higher priority (e.g. user x).
   In case that the Service Request message or PDU Session Establishment message are sent from the UE 3 asking for high priority handling, by indicating higher user x priority, override indication or emergency indication, then the AMF 12 accepts the Service Request message or PDU Session Establishment message without releasing any existing PDU sessions.
7). PDU Session release (user identifier y, release cause = max number of simultaneous active users per UE reached, user y back-off timer). The network initiates PDU Session Release for user y.
   In details, the following sub-steps are taken.
   - Step 7-1 The AMF 12 invokes the Nsmf_PDUSession_ReleaseSMContext request to the SMF 13 to request the release of the PDU Session. The AMF 12 includes the release cause = max number of simultaneously active users per UE reached/exceeded and user y back-off timer in the Nsmf_PDUSession_ReleaseSMContext request.
   - Step 7-2 The SMF 13 releases network resources for the PDU session by contacting the AMF 12 and the UPF 11.
   - Step 7-3 The SMF 13 sends the PDU session release command message to the UE 3 with release cause = max number of simultaneously active users per UE is reached/ exceeded and user y back-off timer.
   - Step 7-4 When the UE 3 receives the PDU session release command message with release cause = max number of simultaneously active users per UE is reached/ exceeded and user y back-off timer, the UE 3 shall not allow user y to initiate another service request or PDU session establishment request for the duration of the user y back-off timer. If the UE 3 moves to another PLMN or another location area, the user y back-off timer is cancelled, i.e. set to zero. Change of the cell does not reset the user y back-off timer. Alternatively, if the UE 3 moves to another PLMN or another location area, the user y back-off timer can be maintained.
8). Service release Notification (release cause = max number of simultaneous active users per UE reached, user y back-off timer). The UE 3 notifies user y for the release of the PDU Session and returns a release cause = max number of simultaneously active users per UE is reached. The UE 3 may also return a user y back-off timer. If user y back-off timer is returned, the user y shall not trigger another service request for the duration of the user y back-off timer.
9). Nsmf_PDUSession_CreateSMContext Request (UE Id, user identifier x, user x priority) - The AMF 12 requests SMF 13 for PDU Session Establishment for user x.
10). PDU Session Establishment for user x - PDU Session Establishment for user x proceeds as per 3GPP TS 23.502.
11). User x Service Accept - The UE 3 notifies user x for the successful service access or PDU Session establishment.

Example Aspect 4 not being part of the invention:
UE centric solution - When the max number of simultaneously active users per UE has been reached or exceeded, the UE 3 may release the user with the lowest priority (e.g. user y) in order to accommodate a new user (e.g. user x) which has higher priority than user y.

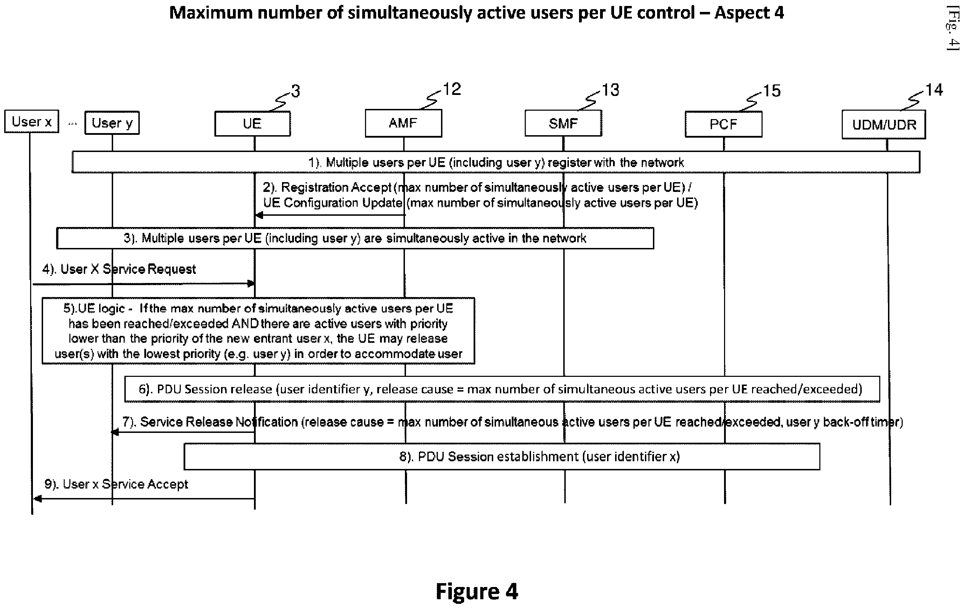

Figure 4 is a schematic signalling (timing) diagram illustrating an exemplary method for controlling maximum number of simultaneously active users per UE control.

1). This step 1) indicates that multiple users per UE (including user y) have been registered with the network.
2). Registration Accept (max number of simultaneously active users per UE) message during the Registration procedure / UE Configuration Update (max number of simultaneously active users per UE) - The UE 3 receives the max number of simultaneously active users per UE parameter from the network during the registration procedure within Registration Accept message or via the UE Configuration Update message. The max number of simultaneously active users per UE may be operator configured in the network or a subscription parameter in the UDM/UDR 14 and made available in the UE context within the AMF 12. If the max number of simultaneous active users per UE parameter is available via the PCF 15, the max number of simultaneously active users per UE retrieved from PCF 15 overrides the one retrieved by the UDM/UDR 14.
3). Multiple users per UE (including user y) are simultaneously active in the network, e.g. the users have active PDU Sessions with the network. The AMF 12 keeps track of the current number of active users per UE, i.e. when the AMF 12 accepts the new PDU session from a new user from a certain UE 3, the AMF 12 increases the number of the current active users per that UE 3. When the AMF 12 releases or deactivates an existing PDU session and that PDU session is the only PDU session for that user, then the AMF 12 decreases the number of the current active users per that UE 3.
4). User x Service Request - User x requests a service.
5).UE logic - If (the max number of simultaneously active users per UE has been reached or exceeded AND there are active users with priority lower than the priority of the new entrant user x), the UE 3 may release user(s) with the lowest priority (e.g. user y) in order to accommodate user x which has higher priority than user y.
6). PDU Session release (user identifier y, release cause = max number of simultaneously active users per UE reached/exceeded, user y back-off timer). The UE 3 initiates the UE triggered PDU Session Release procedure for user y. The PDU Session for user y is released with release cause = max number of simultaneously active users per UE is reached/exceeded.
7). Service Release Notification (release cause = max number of simultaneous active users per UE reached/exceeded, user y back-off timer). The UE 3 notifies user y for the release of the PDU session and returns a release cause = max number of simultaneously active users per UE is reached/exceeded. The UE 3 may also return a user y back-off timer. If user y back-off timer is returned, the user y shall not trigger another service request for the duration of the user y back-off timer. If user y back-off timer is returned, the user y shall not trigger another service request for the duration of the user y back-off timer. If the UE 3 moves to another PLMN or another location area, the user y back-off timer is cancelled, i.e. set to zero. Change of the cell does not reset the user y back-off timer.
8). PDU Session Establishment (user identifier x) - A UE 3 triggered PDU Session Establishment for user x.
9). User x Service Accept - After successful PDU Session establishment for user x, the UE 3 notifies user x for the successful outcome.

### Solution 3: Multiple Users per UE control in connected mode mobility

### Example Aspect 5: Multiple Users UE Handover

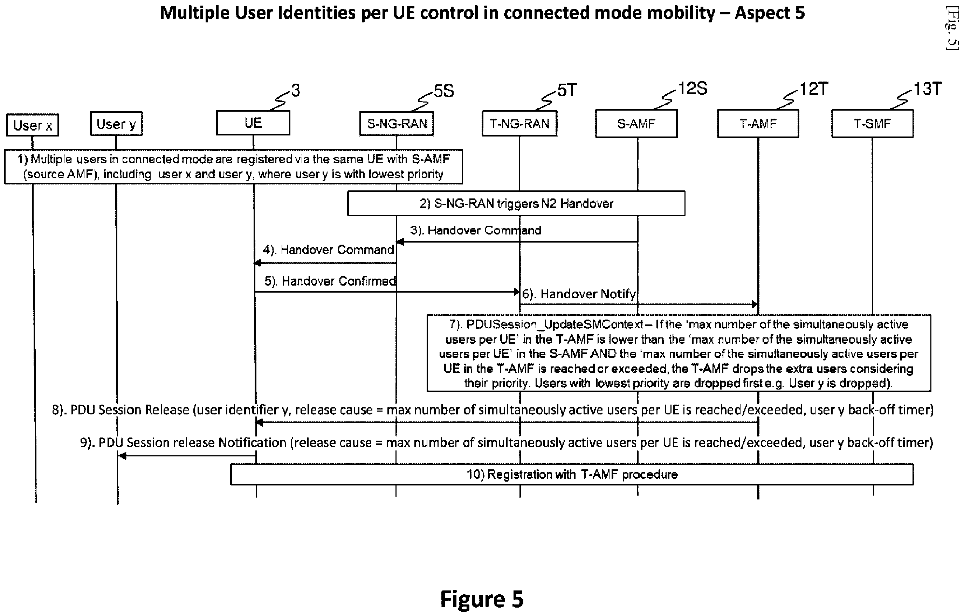

During handover, when multiple users UE 3 moves to a new AMF 12 where the 'max number of simultaneously active users' is lower than the currently connected number of users, the network releases the extra number of users with the lowest user priority. Figure 5 is a schematic signalling (timing) diagram illustrating an exemplary method for multiple users per UE control in connected mode mobility.
1). Multiple users in connected mode are registered via the same UE 3 with S-AMF (source AMF) 12S, including user x and user y, where user y is with lowest priority. Both, the S-AMF 12S and T-AMF 12T keep track of the current number of active users per UE, i.e. when the S-AMF 12S/T-AMF 12T accepts new PDU session from a new user from a certain UE 3, the S-AMF 12S/T-AMF 12T increases the number of the current active users per that UE 3. If the S-AMF 12S/T-AMF 12T releases or deactivates an existing PDU session and that PDU session is the only PDU session for that user, then the S-AMF 12S/T-AMF 12T decreases the number of the current active users per that UE 3.
2) S-NG-RAN 5S triggers N2 Handover.
3 - 5). N2 Handover procedure as per 3GPP TS 23.502.
6). Handover Notify - Target NG-RAN 5T notifies the T-AMF (target AMF) 12T that the handover is completed.
7). PDUSession_UpdateSMContext - Target AMF 12T triggers PDUSession_UpdateSMContext. If the 'max number of the simultaneously active users per UE' in the T-AMF (target AMF) 12T is lower than the 'max number of the simultaneously active users per UE' in the S-AMF (source AMF) 12S AND the 'max number of the simultaneously active users per UE in the T-AMF 12T has been reached or exceeded, the T-AMF 12T drops the extra users considering their priority. Users with lowest priority are dropped first e.g. user y is dropped.
8). PDU Session Release (user identifier y, release cause = max number of simultaneously active users per UE is reached/exceeded, user y back-off timer) - The PDU Session for user y is released with a potential user y back-off timer). When the PDU Session is released with release cause = max number of simultaneously active users per UE is reached or exceeded and a back-off timer is returned, the UE 3 shall not allow user y to initiate another Service Request or PDU Session establishment for the duration of the user y back-off timer. If the UE 3 moves to another PLMN or another location area, the user y back-off timer is cancelled, i.e. set to zero. Change of the cell does not reset the user y back-off timer.
9). PDU Session release Notification (release cause = max number of simultaneously active users per UE is reached/exceeded, user y back-off timer) - The UE 3 notifies user y for the release of the PDU session and returns a release cause = max number of simultaneously active users per UE is reached or exceeded. The UE 3 may also return a user y back-off timer. If user y back-off timer is returned, the user y shall not trigger another service request for the duration of the user y back-off timer. If the UE 3 moves to another PLMN or another location area, the user y back-off timer is cancelled, i.e. set to zero. Change of the cell does not reset the user y back-off timer.
10) Registration with T-AMF 12T procedure - The UE 3 proceeds with registration in the new location as per 3GPP TS 23.502.

### Solution 4: Multiple Users per UE control in idle mode mobility

Example Aspect 6: Non-roaming use case - when the max number of registered users per UE has been reached and the UE 3 moves to a new registration area where the allowed max number of the registered users per UE is smaller, the network may deregister the user of the lowest priority (e.g. user y).

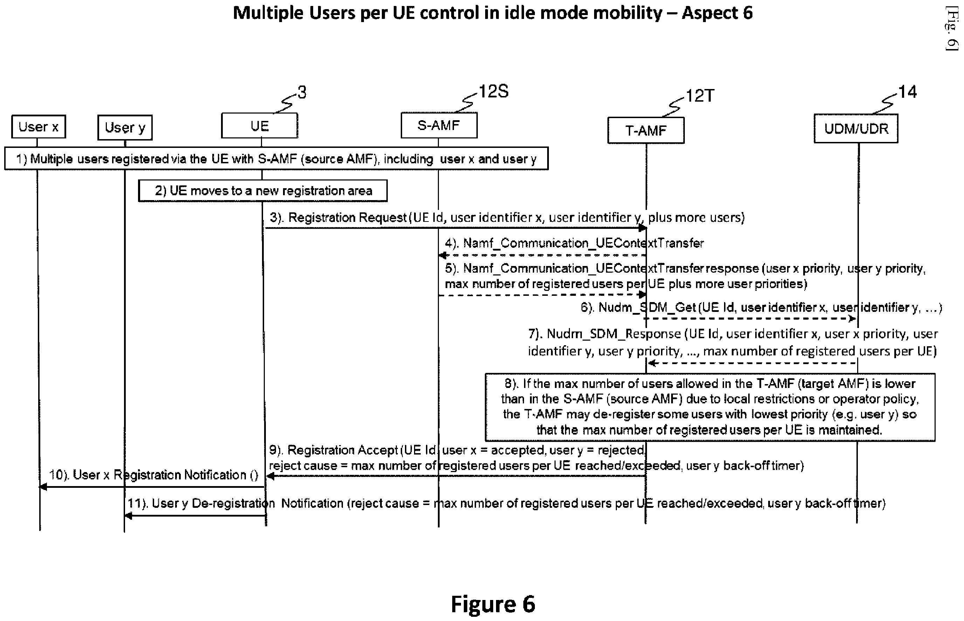

Figure 6 is a schematic signalling (timing) diagram illustrating an exemplary method for multiple users per UE control in idle mode mobility.
1). Multiple users registered via the UE 3 with S-AMF (source or old AMF) 12S, including user x and user y. Both, the S-AMF 12S and T-AMF 12T keep track of the current number of registered users per UE, i.e. when the S-AMF 12S/T-AMF 12T accepts new registration from a new user from a certain UE 3, then the S-AMF 12S/T-AMF 12T increases the number of the current registered users per that UE 3. When the S-AMF 12S/T-AMF 12T de-registers an existing user of a certain UE 3, then the S-AMF 12S/T-AMF 12T decreases the number of the current registered users per that UE 3.
2). The UE 3 moves to a new registration area.
3). Registration Request (UE Id, user identifier x, user identifier y, plus more users) - The UE 3 triggers the registration procedure with T-AMF (target AMF) 12T in the new location.
4). Namf_Communication_UEContextTransfer - If the UE 3 has already been registered, the T-AMF 12T retrieves the UE context, including the user priorities and the max number of registered users per UE, from the S-AMF 12S.
5). Namf_Communication_UEContextTransfer response (user x priority, user y priority, max number of registered users per UE, plus more user priorities).
6). Nudm_SDM_Get (UE Id, user identifier x, user identifier y, ...) - If the UE 3 is asking for initial registration (i.e. the UE 3 has not been registered previously yet), the T-AMF 12T retrieves the UE context, including the user priorities and the max number of registered users per UE, from the UDM/UDR 14. The user priorities and the max number of registered users per UE can be a configurable parameters in the network (e.g. in the AMF 12 or PCF 15 or UDM) based on operator policy or they also can be subscription information within the UDM/UDR 14 configured by the network operator or by the Service Provider via the parameters NEF procedure as per 3GPP TS 23.502. The user priorities and the max number of registered users per UE may also be retrieved from the PCF 15. If max number of registered users per UE parameter is available via the PCF 15, the max number of registered users per UE retrieved from PCF 15 overrides the max number of registered users per UE parameter retrieved by the UDM/UDR 14.
7). Nudm_SDM_Response (UE Id, user identifier x, user x priority, user identifier y, user y priority, ..., max number of registered users per UE).
8). If the max number of registered users in the T-AMF 12T is lower than max number of registered users in the S-AMF 12S due to local restrictions or operator policy, the T-AMF 12T may de-register some users with lowest priority (e.g. user y) so that the allowed max number of registered users per UE is maintained.
9). Registration Accept (UE Id, user x = accepted, user y = rejected, reject cause = max number of registered users per UE reached/exceeded, user y back-off timer). The users that are not registered in the T-AMF 12T i.e. the users that are being deregistered (e.g. user y) are indicated to the UE 3 either within the Registration Accept message or in a Registration Reject message or in UE Configuration Update message or via any other existing or new NAS message. The UE 3 may also return a user back-off timer for the deregistered users. If user back-off timer is returned, the rejected users (e.g. user y) shall not trigger another Registration request for the duration of the user y back-off timer. If the UE 3 moves to another PLMN or another location area, the user y back-off timer is cancelled, i.e. set to zero. Change of the cell does not reset the user y back-off timer.
10). User x Registration Notification () - The UE 3 notifies users (e.g. user x) for successful registration.
11). User y De-registration Notification (reject cause = max number of registered users per UE reached, user y back-off timer) - If user y is rejected with a reject cause = max number of registered users per UE reached/exceeded and is returned an user y back-off timer, the user y shall not attempt to come back while the user y back-off timer is running. If the UE 3 moves to another PLMN or another location area, the user y back-off timer is cancelled, i.e. set to zero. Change of the cell does not reset the user y back-off timer.

Example Aspect 7: Roaming use case - when the max number of registered users per UE is reached or exceeded and the UE 3 moves to a visiting PLMN where the allowed max number of the registered users per UE is smaller, the network may deregister the user(s) of the lowest priority.

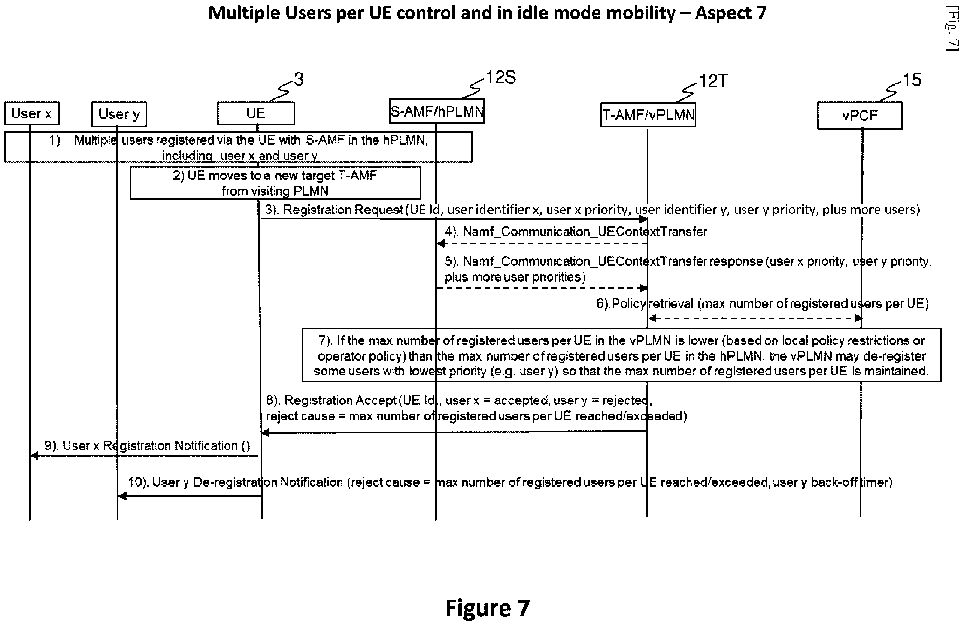

Figure 7 is a schematic signalling (timing) diagram illustrating an exemplary method for controlling a maximum number of registered users per UE in roaming use case.
1). Multiple users registered via the UE 3 with S-AMF 12S of the hPLMN, including user x and user y. Both, the S-AMF (source AMF 12 from the hPLMN) 12S and the T-AMF (target AMF 12 from the visiting PLMN) 12T keep track of the current number of registered users per UE, i.e. when the S-AMF 12S/T-AMF 12T accepts new registration from a new user from a certain UE 3, then the S-AMF 12S/T-AMF 12T increases the number of the current registered users per that UE 3. When the S-AMF 12S/T-AMF 12T de-registers an existing user of a certain UE 3, then the S-AMF 12S/T-AMF 12T decreases the number of the current registered per that UE 3.
2). The UE 3 moves to a new vPLMN.
3). Registration Request (UE Id, user identifier x, user x priority, user identifier y, user y priority, plus more users) - The UE triggers the registration procedure in the vPLMN.
4). Namf_Communication_UEContextTransfer - The T-AMF 12T in the vPLMN retrieves the UE context, including the user priorities and the max number of registered users per UE, from the S-AMF 12S of the hPLMN.
5). Namf_Communication_UEContextTransfer response (user x priority, user y priority, max number of registered users per UE, plus more user priorities).
6). Policy retrieval (max number of registered users per UE) - The T-AMF 12T may also retrieve access and mobility restrictions rules/policy from the PCF 15 of the vPLMN which may impose additional restriction for the max number of registered users per UE in certain location or at certain times based on operator policy or configuration.
7). If the max number of registered users per UE in the T-AMF 12T of the vPLMN is lower (based on local policy restrictions or operator policy or configuration) than the max number of registered users per UE in the S-AMF 12S of hPLMN, the T-AMF 12T may de-register some users with lowest priority (e.g. user y) so that the max number of registered users per UE is maintained.
8). Registration Accept (UE Id, user x = accepted, user y = rejected, reject cause = max number of registered users per UE reached/exceeded, user y back-off timer). The users that are not registered in the vPLMN i.e. the users that are being deregistered (e.g. user y) are indicated to the UE 3 either within the Registration Accept message or in a Registration Reject message or in the UE Configuration Update message or via any other existing or new NAS message. The UE 3 may also return a user back-off timer for the deregistered users (e.g. user y). If user back-off timer is returned, the rejected user(s) (e.g. user y) shall not trigger another Registration request for the duration of the user y back-off timer. If the UE 3 moves to another PLMN or another location area, the user y back-off timer is cancelled, i.e. set to zero. Change of the cell does not reset the user y back-off timer.
9). User x Registration Notification ().
10). User y De-registration Notification (reject cause = max number of registered users per UE reached/exceeded, user y back-off timer) - If user y is rejected with a reject cause = max number of registered users per UE is reached or exceeded and is returned an user y back-off timer, the user y shall not attempt to come back while the user y back-off timer is running. If the UE 3 moves to another PLMN or another location area, the user y back-off timer is cancelled, i.e. set to zero. Change of the cell does not reset the user y back-off timer.

### Summary

Beneficially, the above described example aspects include, although they are not limited to, one or more of the following functionalities:
1) Definition and introduction of `user priority' attribute as part the user profile which may be configured or provided as a subscription information as a part of the user profile within the UDM/UDR. The `user priority' attribute defines the priority between the multiple users per UE.
2) Introduction of `max number of simultaneously active users per UE'. The `max number of simultaneously active users per UE' can be a configurable parameter or a subscription parameter as part of the UE context. The 'max number of simultaneously active users per UE' and the `user priority' can be used by the UE and the network to manage and limit the number of simultaneously active users per UE in connected mode mobility and roaming.
3) Introduction of `max number of registered users per UE'. The `max number of registered users per UE' can be a configurable parameter or a subscription parameter as part of the UE context. The `max number of registered users per UE' and the `user priority' can be used by the UE and the network to manage and limit the registrations of the multiple users per UE in idle and connected mode mobility and in roaming.

In order to provide these functionalities, the above example aspects describe exemplary methods comprising (at least some of) the following steps:
1) User priority attribute definition as part of the multi user profile (operator configurable or subscription based).
2) Max number of simultaneously active users per UE parameter and max number of registered users per UE parameter (operator configurable or subscription based) definition.
3) Number of simultaneously active users per UE control based on user priority when accessing service and in connected mode mobility.

Number of registered users per UE control when in idle mode mobility and roaming.

### Benefits

This disclosure introduces user priority attribute into the multiple users profile as an enabler for management and control of the users access to services. It also allows the UE and the network to restrict the number of the simultaneously active users per UE based on users' priority.

### System overview

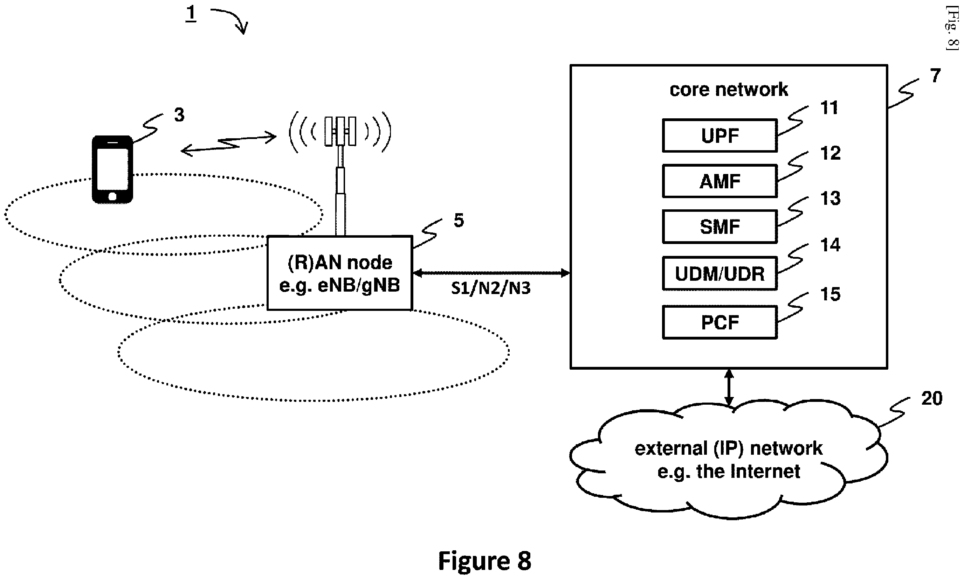

Figure 8 schematically illustrates a mobile (cellular or wireless) telecommunication system 1 to which the above example aspects are applicable.

In this network, users of mobile devices 3 (UEs) can communicate with each other and other users via respective base stations 5 and a core network 7 using an appropriate 3GPP radio access technology (RAT), for example, an E-UTRA and/or 5G RAT. It will be appreciated that a number of base stations 5 form a (radio) access network or (R)AN. As those skilled in the art will appreciate, whilst one mobile device 3 and one base station 5 (RAN) are shown in Figure 8 for illustration purposes, the system, when implemented, will typically include other base stations and mobile devices (UEs).

Each base station 5 controls one or more associated cells (either directly or via other nodes such as home base stations, relays, remote radio heads, distributed units, and/or the like). A base station 5 that supports E-UTRA/4G protocols may be referred to as an 'eNB' and a base station 5 that supports Next Generation/5G protocols may be referred to as a 'gNBs'. It will be appreciated that some base stations 5 may be configured to support both 4G and 5G, and/or any other 3GPP or non-3GPP communication protocols.

The mobile device 3 and its serving base station 5 are connected via an appropriate air interface (for example the so-called 'Uu' interface and/or the like). Neighbouring base stations 5 are connected to each other via an appropriate base station to base station interface (such as the so-called 'X2' interface, 'Xn' interface and/or the like). The base station 5 is also connected to the core network nodes via an appropriate interface (such as the so-called `S1', 'N2', 'N3' interface, and/or the like).

The core network 7 typically includes logical nodes (or 'functions') for supporting communication in the telecommunication system 1. Typically, for example, the core network 7 of a `Next Generation' / 5G system will include, amongst other functions, control plane functions (CPFs) and user plane functions (UPFs) 11. It will be appreciated that the core network 7 may also include, amongst others: an Access and Mobility Management Function (AMF) 12; a Session Management Function (SMF) 13; a Unified Data Management / Unified Data Repository (UDM/UDR) 14; and a Policy Control Function (PCF) 15. From the core network 7, connection to an external IP network / data network 20 (such as the Internet) is also provided.

The components of this system 1 are configured to perform one or more of the above described example aspects.

### User equipment (UE)

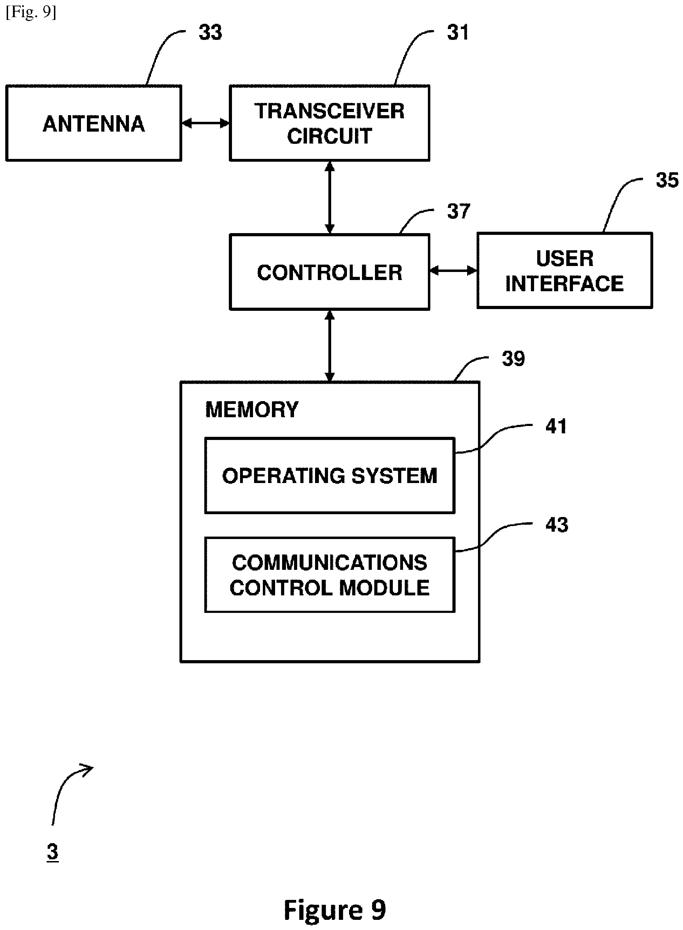

Figure 9 is a block diagram illustrating the main components of the UE (mobile device 3) shown in Figure 8. As shown, the UE 3 includes a transceiver circuit 31 which is operable to transmit signals to and to receive signals from the connected node(s) via one or more antenna 33. Although not necessarily shown in Figure 9, the UE 3 will of course have all the usual functionality of a conventional mobile device (such as a user interface 35) and this may be provided by any one or any combination of hardware, software and firmware, as appropriate. A controller 37 controls the operation of the UE 3 in accordance with software stored in a memory 39. The software may be pre-installed in the memory 39 and/or may be downloaded via the telecommunication network 1 or from a removable data storage device (RMD), for example. The software includes, among other things, an operating system 41 and a communications control module 43. The communications control module 43 is responsible for handling (generating/ sending/receiving) signalling messages and uplink/ downlink data packets between the UE 3 and other nodes, including (R)AN nodes 5, and core network nodes. Such signaling includes appropriately formatted requests and responses relating to registration and management of multiple user identities, and the provision of communication services for such user identities.

### (R)AN node

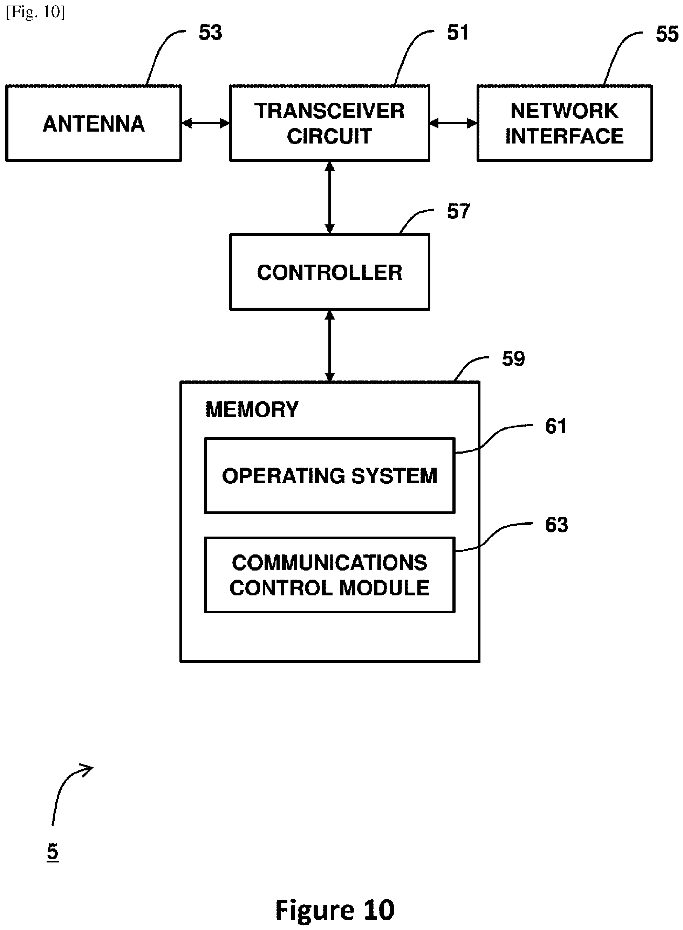

Figure 10 is a block diagram illustrating the main components of an exemplary (R)AN node 5 (base station) shown in Figure 8. As shown, the (R)AN node 5 includes a transceiver circuit 51 which is operable to transmit signals to and to receive signals from connected UE(s) 3 via one or more antenna 53 and to transmit signals to and to receive signals from other network nodes (either directly or indirectly) via a network interface 55. The network interface 55 typically includes an appropriate base station - base station interface (such as X2/Xn) and an appropriate base station - core network interface (such as S1/N2/N3). A controller 57 controls the operation of the (R)AN node 5 in accordance with software stored in a memory 59. The software may be pre-installed in the memory 59 and/or may be downloaded via the telecommunication network 1 or from a removable data storage device (RMD), for example. The software includes, among other things, an operating system 61 and a communications control module 63. The communications control module 63 is responsible for handling (generating/sending/ receiving) signalling between the (R)AN node 5 and other nodes, such as the UE 3 and the core network nodes. Such signaling includes appropriately formatted requests and responses relating to registration and management of multiple user identities, and the provision of communication services for such user identities.

### Core network node

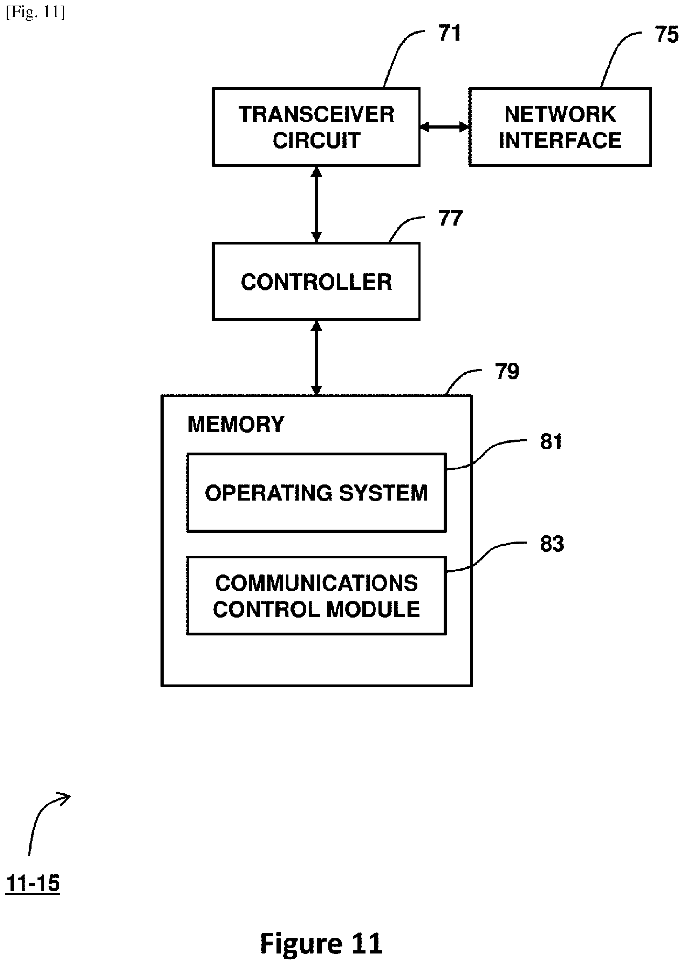

Figure 11 is a block diagram illustrating the main components of a generic core network node (or function) shown in Figure 8, for example, the UPF 11, the AMF 12, the SMF 13, the UDM/UDR 14, and the PCF 15. As shown, the core network node includes a transceiver circuit 71 which is operable to transmit signals to and to receive signals from other nodes (including the UE 3 and the (R)AN node 5) via a network interface 75. A controller 77 controls the operation of the core network node in accordance with software stored in a memory 79. The software may be pre-installed in the memory 79 and/or may be downloaded via the telecommunication network 1 or from a removable data storage device (RMD), for example. The software includes, among other things, an operating system 81 and at least a communications control module 83. The communications control module 83 is responsible for handling (generating/sending/ receiving) signaling between the core network node and other nodes, such as the UE 3, (R)AN node 5, and other core network nodes. Such signaling includes appropriately formatted requests and responses relating to registration and management of multiple user identities, and the provision of communication services for such user identities.

In the above description, the UE, the (R)AN node, and the core network node are described for ease of understanding as having a number of discrete modules (such as the communication control modules). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

Each controller may comprise any suitable form of processing circuitry including (but not limited to), for example: one or more hardware implemented computer processors; microprocessors; central processing units (CPUs); arithmetic logic units (ALUs); input/output (IO) circuits; internal memories / caches (program and/or data); processing registers; communication buses (e.g. control, data and/or address buses); direct memory access (DMA) functions; hardware or software implemented counters, pointers and/or timers; and/or the like.

In the above example aspects, a number of software modules were described. As those skilled in the art will appreciate, the software modules may be provided in compiled or un-compiled form and may be supplied to the UE, the (R)AN node, and the core network node as a signal over a computer network, or on a recording medium. Further, the functionality performed by part or all of this software may be performed using one or more dedicated hardware circuits. However, the use of software modules is preferred as it facilitates the updating of the UE, the (R)AN node, and the core network node in order to update their functionalities.

The above example aspects are also applicable to 'non-mobile' or generally stationary user equipment.

Various other modifications will be apparent to those skilled in the art and will not be described in further detail here.

### Abbreviations

3GPP 3rd Generation Partnership Project
5GC 5G Core Network
5GS 5G System
5G-AN 5G Access Network
AF Application Function
AMF Access and Mobility Management Function
AN Access Network
AS Access Stratum
gNB Next generation Note B
MM Mobility Management
NAS Non-Access Stratum
NEF Network Exposure Function
NF Network Function
NG-RAN Next Generation Radio Access Network
NR New Radio
PCC Policy and Charging Control
PCF Policy Control Function
PDU Protocol Data Unit
PLMN Public land mobile network
(R)AN (Radio) Access Network
RRC Radio Resource Control
SM Session Management
SMF Session Management Function
UDM Unified Data Management
UDR Unified Data Repository
UPF User Plane Function
UE User Equipment

### Definitions

For the purposes of the present document, the terms and definitions given in 3GPP TR 21.905 [1] and the following apply. A term defined in the present document takes precedence over the definition of the same term, if any, in 3GPP TR 21.905 [1]. user identity: information representing a user in a specific context. A user can have several user identities, e.g. a User Identity in the context of his profession, or a private User Identity for some aspects of private life, see 3GPP TR 22.904 [5].
**user identifier:** a piece of information used to identify one specific User Identity in one or more systems, see 3GPP TR 22.904 [5].
**user identity profile:** A collection of information associated with the User Identities of a user, see 3GPP TR 22.904 [5].

### List of References stated in the present specification

[1] 3GPP TR 21.905: "Vocabulary for 3GPP Specifications". V15.0.0 (2018-03) -
[2] 3GPP TS 23.501: "System Architecture for the 5G System; Stage 2". V16.1.0 (2019-06) - http://www.3gpp.org/ftp/Specs/archive/23_series/23.501/23501-g10.zip
[3] 3GPP TS 23.502: "Procedures for the 5G System; Stage 2" V16.140 (2019-06) - http://www.3gpp.org/ftp/Specs/archive/23_series/23.502/23502-g10.zip
[4] SA2 WID agreed in the SA pleary#84 in 2^{nd} week of June 2019 - http://www.3gpp.org/ftp/Specs/archive/23_series/23.761 .zip (S2-1901392)
[5] The latest SA1 TR 22.904 Study on user centric identifiers and authentication - http://www.3gpp.org/ftp/Specs/archive/22_series/22.904/22904-g10.zip

This application is based upon and claims the benefit of priority from European Patent Application No. 19202859.5, filed on October 11, 2019.

### Reference Signs List

1 TELECOMMUNICATION SYSTEM
3 MOBILE DEVICE (UE)
31 TRANSCEIVER CIRCUIT
33 ANTENNA
35 USER INTERFACE
37 CONTROLLER
39 MEMORY
41 OPERATING SYSTEM
43 COMMUNICATION CONTROL MODULE
5 (R)AN NODE (gNB/eNB)
51 TRANSCEIVER CIRCUIT
53 ANTENNA
55 NETWORK INTERFACE
57 CONTROLLER
59 MEMORY
61 OPERATING SYSTEM
63 COMMUNICATION CONTROL MODULE
7 CORE NETWORK
11 UPF
12 AMF
13 SMF
14 UDM/UDR
15 PCF
71 TRANSCEIVER CIRCUIT
75 NETWORK INTERFACE
77 CONTROLLER
79 MEMORY
81 OPERATING SYSTEM
83 COMMUNICATION CONTROL MODULE
20 EXTERNAL IP NETWORK / DATA NETWORK

## Claims

1. An access and mobility management function node, comprising:
means for determining a user with lowest priority among users in User Equipment, UE, simultaneously used by the users in a case where the number of users of the UE exceeds a threshold; and
means for initiating a release procedure for a PDU session of the user with lowest priority, wherein
the threshold indicates a max allowed number of users for the UE.

2. The access and mobility management function node according to claim 1, wherein
the means for determining is configured to determine a priority per user based on user profile information within a subscriber data management node.

3. The access and mobility management function node according to claim 1 or 2, further comprising:
means for receiving a Non Access Stratum, NAS, message including a request for a user using the PDU session, from the UE, wherein
the means for determining is configured to determine in response to the NAS message.

4. The access and mobility management function node according to claim 3, further comprising:
means for initiating a PDU session establishment procedure for the user using the PDU session requested by the NAS message, after releasing the PDU session for the user with lowest priority.

5. The access and mobility management function node according to claim 3 or 4, wherein
the NAS message includes a priority with the user using the PDU session, and
the means for determining is configured to determine the user with lowest priority using the priority included in the NAS message.

6. The access and mobility management function node according to claim 1 or 2, further comprising:
means for receiving a notification indicating that the max allowed number of users for the UE is decreased, wherein
the means for determining is configured to determine the users with the lowest priority triggered by the notification.

7. The access and mobility management function node according to claim 1 or 2, wherein
the means for determining is configured to determine in a case where the threshold is updated to decrease by local configuration of the access and mobility management function node.

8. The access and mobility management function node according to claim 1 or 2, further comprising:
means for receiving a notification indicating handover to the access and mobility management function node is completed, from an access network node, wherein
the means for determining is configured to determine the users with the lowest priority triggered by the notification.

9. The access and mobility management function node according to claim 1 or 2, further comprising:
means for receiving a registration request message for at least two users, from the UE, wherein
the means for determining is configured to determine the users with the lowest priority in response to the registration request message.

10. The access and mobility management function node according to any one of claims 1 to 9, further comprising:
means for transmitting a non access stratum, NAS, message including a cause indicating the max number of the UE reached, and a back-off timer so that the user with the lowest priority shall not initiate another request procedure while the back-off timer is running.

11. A controlling method for an access and mobility management function node, the controlling method comprising:
determining a user with lowest priority among users in User Equipment, UE, simultaneously used by the users in a case where the number of users of the UE exceeds a threshold; and
initiating a release procedure for a PDU session of the user with lowest priority, wherein
the threshold indicates a max allowed number of users for the UE.

## Patentansprüche

1. Zugangs- und Mobilitätsmanagementfunktionsknoten, mit:
einer Einrichtung zum Bestimmen eines Benutzers mit der niedrigsten Priorität unter Benutzern eines Benutzergeräts, UE, das durch die Benutzer gleichzeitig verwendet wird, in einem Fall, in dem die Anzahl der Benutzer des UE einen Schwellenwert überschreitet; und
einer Einrichtung zum Einleiten einer Freigabeprozedur für eine PDU-Sitzung des Benutzers mit der niedrigsten Priorität,
wobei der Schwellenwert eine maximal zulässige Anzahl von Benutzern für das UE anzeigt.

2. Zugangs- und Mobilitätsmanagementfunktionsknoten nach Anspruch 1, wobei
die Bestimmungseinrichtung dafür konfiguriert ist, eine Priorität pro Benutzer basierend auf Benutzerprofilinformation innerhalb eines Teilnehmerdatenmanagementknotens zu bestimmen.

3. Zugangs- und Mobilitätsmanagementfunktionsknoten nach Anspruch 1 oder 2, ferner mit:
einer Einrichtung zum Empfangen einer NAS-, Non-Access Stratum, Nachricht, die eine Anforderung für einen Benutzer enthält, der die PDU-Sitzung verwendet, vom UE,
wobei die Bestimmungseinrichtung dafür konfiguriert ist, die Bestimmung in Antwort auf die NAS-Nachricht auszuführen.

4. Zugangs- und Mobilitätsmanagementfunktionsknoten nach Anspruch 3, ferner mit:
einer Einrichtung zum Einleiten einer PDU-Sitzungsaufbauprozedur für den Benutzer, der die durch die NAS-Nachricht angeforderte PDU-Sitzung verwendet, nachdem die PDU-Sitzung für den Benutzer mit der niedrigsten Priorität freigegeben wurde.

5. Zugangs- und Mobilitätsmanagementfunktionsknoten nach Anspruch 3 oder 4, wobei
die NAS-Nachricht eine Priorität für den Benutzer enthält, der die PDU-Sitzung verwendet, und
die Bestimmungseinrichtung dafür konfiguriert ist, den Benutzer mit der niedrigsten Priorität unter Verwendung der in der NAS-Nachricht enthaltenen Priorität zu bestimmen.

6. Zugangs- und Mobilitätsmanagementfunktionsknoten nach Anspruch 1 oder 2, ferner mit:
einer Einrichtung zum Empfangen einer Benachrichtigung, die anzeigt, dass die maximal zulässige Anzahl von Benutzern des UE abgenommen hat, wobei
die Bestimmungseinrichtung dafür konfiguriert ist, die Benutzer mit der niedrigsten Priorität, getriggert durch die Benachrichtigung, zu bestimmen.

7. Zugangs- und Mobilitätsmanagementfunktionsknoten nach Anspruch 1 oder 2, wobei
die Bestimmungseinrichtung dafür konfiguriert ist, eine Bestimmung in einem Fall auszuführen, in dem der Schwellenwert durch eine lokale Konfiguration des Zugangs- und Mobilitätsmanagementfunktionsknotens so aktualisiert wird, dass er abnimmt.

8. Zugangs- und Mobilitätsmanagementfunktionsknoten nach Anspruch 1 oder 2, ferner mit:
einer Einrichtung zum Empfangen einer Benachrichtigung, die anzeigt, dass ein Handover an den Zugangs- und Mobilitätsmanagementfunktionsknoten abgeschlossen ist, von einem Zugangsnetzwerkknoten, wobei
die Bestimmungseinrichtung dafür konfiguriert ist, die Benutzer mit der niedrigsten Priorität, getriggert durch die Benachrichtigung, zu bestimmen.

9. Zugangs- und Mobilitätsmanagementfunktionsknoten nach Anspruch 1 oder 2, ferner mit:
einer Einrichtung zum Empfangen einer Registrierungsanforderungsnachricht für mindestens zwei Benutzer vom UE,
wobei die Bestimmungseinrichtung dafür konfiguriert ist, die Benutzer mit der niedrigsten Priorität in Antwort auf die Registrierungsanforderungsnachricht zu bestimmen.

10. Zugangs- und Mobilitätsmanagementfunktionsknoten nach einem der Ansprüche 1 bis 9, ferner mit:
einer Einrichtung zum Übertragen einer NAS-, Non-Access Stratum, Nachricht, die eine Ursache enthält, die die erreichte maximale Anzahl von UEs anzeigt, und einen Back-Off-Timer, so dass der Benutzer mit der niedrigsten Priorität keine weitere Anforderungsprozedur einleiten soll, während der Back-Off-Timer läuft.

11. Steuerverfahren für einen Zugangs- und Mobilitätsmanagementfunktionsknoten, wobei das Steuerverfahren aufweist:
Bestimmen eines Benutzers mit der niedrigsten Priorität unter Benutzern eines Benutzergeräts, UE, das gleichzeitig durch die Benutzer verwendet wird, in einem Fall, in dem die Anzahl von Benutzern des UE einen Schwellenwert überschreitet; und
Einleiten einer Freigabeprozedur für eine PDU-Sitzung des Benutzers mit der niedrigsten Priorität, wobei
der Schwellenwert eine maximal zulässige Anzahl von Benutzern des UE anzeigt.

## Revendications

1. Noeud de fonction de gestion d'accès et de mobilité, comprenant :
des moyens de détermination d'un utilisateur avec une priorité la plus basse parmi des utilisateurs d'un équipement utilisateur, UE, utilisé simultanément par les utilisateurs dans un cas où le nombre d'utilisateurs de l'UE dépasse un seuil ; et
des moyens d'initiation d'une procédure de libération d'une session PDU de l'utilisateur avec une priorité la plus basse, dans lequel
le seuil indique un nombre autorisé maximal d'utilisateurs de l'UE.

2. Noeud de fonction de gestion d'accès et de mobilité selon la revendication 1, dans lequel
les moyens de détermination sont configurés pour déterminer une priorité par utilisateur sur la base d'informations de profil d'utilisateur à l'intérieur d'un noeud de gestion de données d'abonné.

3. Noeud de fonction de gestion d'accès et de mobilité selon la revendication 1 ou 2, comprenant en outre :
des moyens de réception d'un message de strate sans accès, NAS, incluant une demande pour un utilisateur utilisant la session PDU, depuis l'UE, dans lequel
les moyens de détermination sont configurés pour effectuer une détermination en réponse au message NAS.

4. Noeud de fonction de gestion d'accès et de mobilité selon la revendication 3, comprenant en outre :
des moyens d'initiation d'une procédure d'établissement de session PDU pour l'utilisateur en utilisant la session PDU demandée par le message NAS, après la libération de la session PDU pour l'utilisateur avec une priorité la plus basse.

5. Noeud de fonction de gestion d'accès et de mobilité selon la revendication 3 ou 4, dans lequel
le message NAS inclut une priorité de l'utilisateur utilisant la session PDU, et
les moyens de détermination sont configurés pour déterminer l'utilisateur avec une priorité la plus basse en utilisant la priorité incluse dans le message NAS.

6. Noeud de fonction de gestion d'accès et de mobilité selon la revendication 1 ou 2, comprenant en outre :
des moyens de réception d'une notification indiquant que le nombre autorisé maximal d'utilisateurs pour l'UE est réduit, dans lequel
les moyens de détermination sont configurés pour déterminer les utilisateurs avec la priorité la plus basse déclenchée par la notification.

7. Noeud de fonction de gestion d'accès et de mobilité selon la revendication 1 ou 2, dans lequel
les moyens de détermination sont configurés pour déterminer un cas où le seuil est mis à jour pour être réduit par configuration locale du noeud de fonction de gestion d'accès de mobilité.

8. Noeud de fonction de gestion d'accès et de mobilité selon la revendication 1 ou 2, comprenant en outre :
des moyens de réception d'une notification indiquant qu'un transfert intercellulaire vers le noeud de fonction de gestion d'accès de mobilité est achevé, depuis un noeud de réseau d'accès, dans lequel
les moyens de détermination sont configurés pour déterminer les utilisateurs avec la priorité la plus basse déclenchée par la notification.

9. Noeud de fonction de gestion d'accès et de mobilité selon la revendication 1 ou 2, comprenant en outre :
des moyens de réception d'un message de demande d'enregistrement pour au moins deux utilisateurs, depuis l'UE, dans lequel
les moyens de détermination sont configurés pour déterminer les utilisateurs avec la priorité la plus basse en réponse au message de demande d'enregistrement.

10. Noeud de fonction de gestion d'accès et de mobilité selon l'une quelconque des revendications 1 à 9, comprenant en outre :
des moyens de transmission d'un message de strate sans accès, NAS, incluant une cause indiquant que le nombre maximal de l'UE a été atteint, et une temporisation de délai d'attente de sorte que l'utilisateur avec la priorité la plus basse ne doive pas initier une autre procédure de demande pendant que la temporisation de délai d'attente est en cours.

11. Procédé de commande pour un noeud de fonction de gestion d'accès et de mobilité, le procédé de commande comprenant :
la détermination d'un utilisateur avec une priorité la plus basse parmi des utilisateurs d'un équipement utilisateur, UE, utilisé simultanément par les utilisateurs dans un cas où le nombre d'utilisateurs de l'UE dépasse un seuil ; et
l'initiation d'une procédure de libération d'une session PDU de l'utilisateur avec une priorité la plus basse, dans lequel
le seuil indique un nombre autorisé maximal d'utilisateurs de l'UE.
